Europäisches Patentamt

(19) European Patent Office

Office européen des brevets

(11) Publication number: **0 130 136**
**B1**

(12) **EUROPEAN PATENT SPECIFICATION**

(45) Date of publication of patent specification: **05.08.87**   (51) Int. Cl.⁴: **B 60 C 17/04**

(21) Application number: **84630097.8**

(22) Date of filing: **22.06.84**

(54) **Run flat device.**

(30) Priority: **24.06.83 US 507836**

(43) Date of publication of application:
**02.01.85 Bulletin 85/01**

(45) Publication of the grant of the patent:
**05.08.87 Bulletin 87/32**

(84) Designated Contracting States:
**DE GB LU**

(56) References cited:
**CH-A- 210 701**
**DE-A-1 605 629**
**DE-A-2 712 242**
**FR-A-2 239 353**
**FR-A-2 427 918**
**US-A-3 777 797**
**US-A-3 889 734**

(73) Proprietor: **THE GOODYEAR TIRE & RUBBER
COMPANY
1144 East Market Street
Akron, Ohio 44316-0001 (US)**

(72) Inventor: **Smith, William Thomas
1453 Canyon Street Northeast
Uniontown Ohio 44685 (US)**
Inventor: **Rooney, Timothy Michael
3800 Gleagles Boulevard
Uniontown Ohio 44685 (US)**
Inventor: **Watts, George Timothy
325 McAlmont Road Northeast
North Canton Ohio 44720 (US)**

(74) Representative: **Weyland, Joseph Jean Pierre
Goodyear Technical Center Luxembourg Patent
Department Avenue Gordon Smith
L-7750 Colmar-Berg (LU)**

Courier Press, Leamington Spa, England.

# 0 130 136

**Description**

Background of the invention

This invention generally relates to an assembly of a multi-piece rim, a tire, and a run flat device comprising:

(a) a multi-piece rim comprising a substantially cylindrical rim base having a flange extending radially outwardly from one axial end thereof and a groove in said rim near its other axial end, a movable flange mounted on said rim base, and an O-ring disposed within said groove;

(b) a tubeless pneumatic tire mounted upon said rim, said tire having a pair of bead portions with one bead portion disposed adjacent to the flange of said rim base and the other bead portion adjacent to said movable flange; and

(c) an annular ring-shaped run flat device comprising a rigid radially inner ring and a resilient radially outer ring, said rings comprising a plurality of parts having each end thereof fastened to an end of another part, each part comprising a radially inner rigid portion having a horseshoe-shaped cross section and containing radial reinforcements that extend radially inwardly to the open side of said horseshoe-shape, and a radially outer resilient portion having a radially inner surface fastened to a radially outer surface of said inner rigid portion, the run flat device being affixed to the rim and having a height that is 25 to 55 percent of the tire section height while the height of the rigid inner ring is 20 to 80 percent of the height of the run flat device. DE—A—1 605 629, for example, describes such an assembly.

Various run flat devices exist for pneumatic vehicle tires. Their general purpose is to provide a surface on which the inner surface of the portion of the tire beneath the tread can rest when air is purposely or accidentally removed either totally or to a great degree such that the pneumatic tire collapses totally or partially. The tire then can be run on the vehicle for a period of time until the vehicle operator is able to replace it with another tire. Such deflations could occur on a passenger tire on a street or highway, on an off-the-road vehicle that would come in contact with sharp and abrasive objects, and military vehicles whose tires might be punctured by a bullet or shrapnel.

Many prior art devices have been inadequate because they were not strong enough to support a vehicle with a deflated tire or absorb impact when the tire was inflated, but came into contact with an irregular surface such as a chuck hole or a log, which would cause the inner surface of the tire, even though completely inflated, to come in contact with the run flat device. Other devices were not easy to assemble or required nonconventional rims.

There has therefore been a need for a highly durable, light weight, impact resistant, heat resistant run flat device which was easy to assemble and which could be used on conventional rims.

In accordance with the invention an assembly according to the preamble of claim 1 is characterized in that said rim has a plurality of circumferentially spaced apart stops thereon, and one of the radial reinforcements of said run flat device is disposed between said stops to restrict circumferential movement of the run flat device with respect to said rim. The outer ring provides the resilient load bearing surface while the inner ring is the load carrying member.

Brief description of the drawings

Figure 1 is a side view of a two-piece device with both pieces fastened together.

Figure 2 is a cross sectional view of the device mounted on a three-piece rim.

Figure 3 is an enlarged side view of a portion of the device positioned on a rim inside a tire.

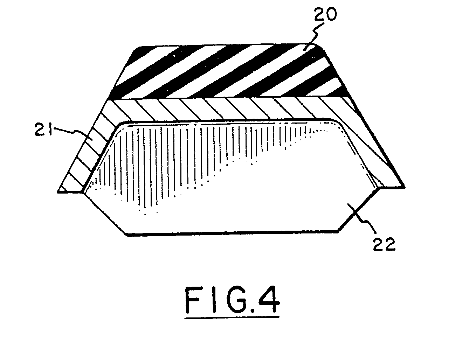

Figure 4 is the cross sectional view of another embodiment of the device.

Detailed description of the invention

In one embodiment of the present invention, the rigid non-flexible radially inner ring has a cross-section with an outer shape that can be rectangular or trapezoidal.

The radially inner ring is substantially hollow so as to contribute to the light weight of the device. While the radially inner ring is substantially hollow, it can contain radial reinforcements. These radial reinforcements should be used sparingly so as to keep the weight of the device to a minimum. To further reduce the weight of the device openings can be present in the top side and/or lateral sides and/or bottom side of the radially inner ring. The number and size of the openings are limited only by the structural strength requirements of the device, i.e., to absorb the impacts experienced by the device either while the tire is inflated or under reduced or zero pressure.

The hollow radially inner ring need not possess a bottom side. When it does not, it can be attached to the wheel rim through the bottom edges of its lateral sides, or radial reinforcements, if present, or in any other desired manner.

The resilient non-rigid radially outer ring also has a rectangular or trapezoidal cross-section. Its radially inner surface should be no wider than the radially outer surface of the rigid ring. Preferably it is the same width.

In one embodiment both the rigid and non-rigid rings have rectangular cross sections with the top side of the rigid portion being essentially the same width as the bottom side of the non-rigid portion. In another embodiment, both rings have trapezoidal cross sections with the wide bases being radially inward and the

2

# 0 130 136

outer side of the rigid portion being essentially the same width as and centered on the inner side of the non-rigid portion.

The outer ring can rely solely on the inherent resiliency of the material of which it is comprised for its overall resiliency and flexibility. However, it can also relay on its shape to enhance its resiliency and flexibility, e.g., by openings within the body thereof or grooving in its radially outer surface.

For larger vehicles the radially outer surface of the non-rigid ring should contain less grooving and preferably no grooving at all. The non-rigid ring should also be of a lesser thickness for heavy vehicles. When used with lighter vehicles, the thickness and/or grooving can be increased, if desired.

The outer surface of the non-rigid portion should be relatively flat or slightly rounded to more uniformly distribute the load over the contact area.

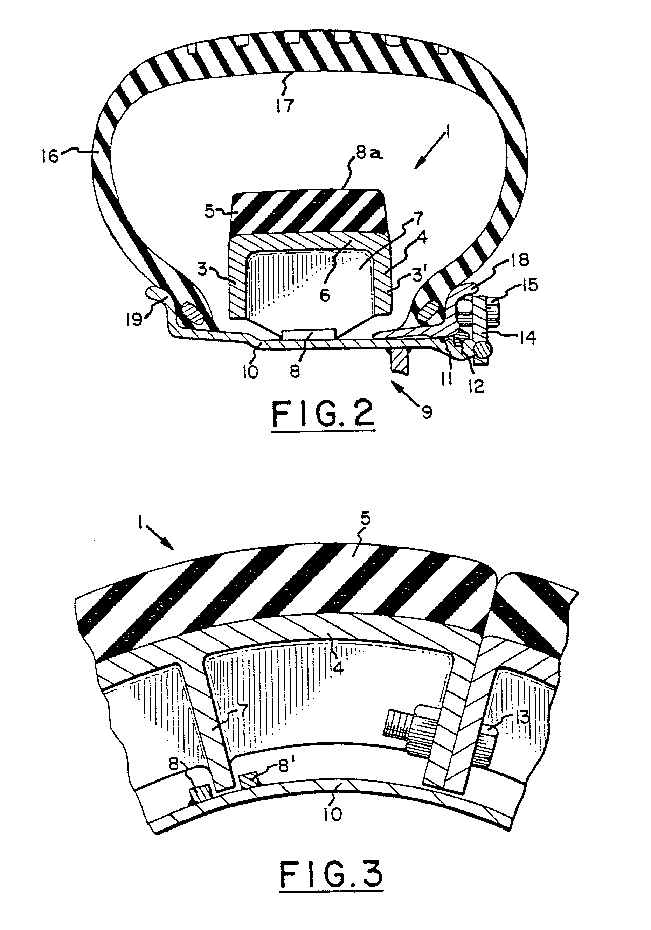

In one embodiment, particularly where the device is used for a heavy vehicle, the radially outer ring has a rectangular cross section and a continuous, flat outer surface and the radially inner ring has a rectangular cross section and an opening therein which is essentially rectangular in shape. Preferably the inner ring has no bottom side. The radially inner ring would therefore have a square U, i.e., squared horseshoe shape such as depicted in Figure 2.

The use of a flexible, resilient component having the load bearing surface, with a rigid load carrying member beneath it, results in a satisfactory run flat device.

In one embodiment, the total section height of the run flat device from the rim base to the outer surface 8 of the resilient outer ring is 25 to 55 percent, preferably 30 to 45 percent of the total section height of the tire in which it is positioned, the section height of the tire being one-half times the difference between the outer diameter of the tire and the nominal rim diameter. The total section height of the run flat device varies according to the loading requirements of the vehicle and tire and the type of service. For example, the total section height of the run flat device should preferably be 30 to 45 percent of the tire section height for large all terrain military vehicles, most preferably 30 to 35 percent.

The rigid device may be made of any rigid material including metals. Examples of metals are steel, magnesium and aluminum. It can also be made from rigid plastics such as fiber reinforced composites. Magnesium and aluminum are particularly desirable because of their light weight. Plastic materials should be selected carefully with consideration being given to their high temperature properties, since heat build-up can occur during the use of this device. The top side and lateral sides of the rigid device as well as any supports can be and preferably are of a unit construction, but can be separate components.

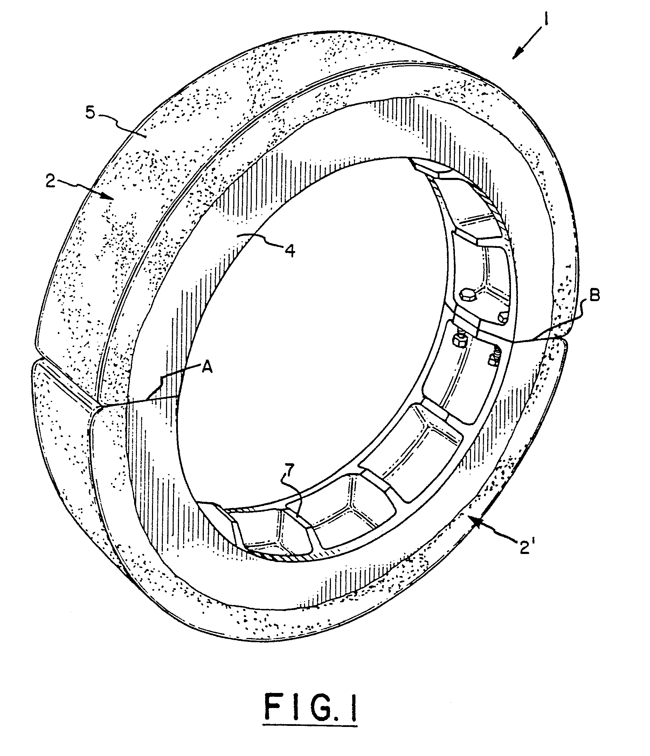

The entire device itself must be in at least two parts so as to be capable of being placed inside the tire. In this respect see 2 and 2' in Figure 1.

The non-rigid portion can be any material which will deflect upon impact but return to its original configuration when the impact is removed. Vulcanized elastomers are preferred materials, both natural and synthetic.

The bottom surface of the non-rigid outer ring and radially outer surface of the rigid inner ring can be positioned against one another in any conventional manner, for example by fasteners or conventional metal-to-rubber adhesives or by having interlocking surfaces, so long as the two rings are rendered incapable of relative movement in any direction to each other. Mere friction contact is sufficient if great enough to prevent any significant relative movement between the two surfaces.

Vulcanized elastomers which can be used in the non-rigid portion include conventional tread compounds. Elastomers which can be used include vulcanized polymers having a modulus of 5 to 16 (preferably 12 to 16) meganewtons, an elongation of 400 to 700 (preferably 400 to 500) percent, tensile of 14 to 30 (preferably 20 to 30) meganewtons, a Shore A hardness of 50 to 90 (preferably 60 to 70) and a resiliency, as measured by Goodyear Heally hot (100°C) rebound, of at least 30 percent, preferably at least 60 percent and most preferably at least 70 percent. Modulus, elongation and tensile are measured by ASTM D 412. Shore A measurements are made according to ASTM D 2240. Goodyear Heally rebound is measured by ASTM D 1054.

Although not limited thereto, the following rubber composition can be used in the non-rigid portion after vulcanization thereof, for example for 25 minutes at 150°C.

| Ingredients | Parts by weight |
|---|---|
| Natural rubber | 100 |
| HAF black | 50 |
| Processing oil | 10 |
| Amorphous silica | 20 |
| N-t-butyl-2-benzothiazylsulfenamide | 1.5 |
| Waxes | 1.0 |
| Antioxidant | 1.5 |
| Antiozonant | 1.5 |
| Zinc oxide | 3 |
| Sulfur | 2 |

A conventional manner of mounting this multi-piece device into a tire is described as follows. One

3

piece (for purposes of this illustration a two-piece device will be considered) is placed inside the tire with the non-rigid portion facing the inside surface of the tire beneath the tread. The second piece is placed within the tire and then adhered or fastened at each of its ends to each of the ends of the other half of the device.

This device is designed to be used only with a multi-piece rim, for example a two-piece rim that can simply be bolted together or a multi-piece rim using a removeable flange or flanges, an O ring and lock ring.

The run flat device is mounted in such a fashion that it preferably will not rotate circumferentially around the rim when the vehicle is in motion. It can either be permanently affixed or loosely affixed, for example, mounting a radial support between two stoppers which are permanently affixed to the surface of the rim. The latter positioning would permit only slight circumferential movement. While lateral movement would occur in the latter situation, this is normally not a problem.

Conventional lubricants or coolants normally used with other run flat devices, such as gels, should be used with the present device to lubricate the interface between the radially outer surface of the outer ring and the inner surface of the tire beneath the tread.

Figure 1 is a perspective view of a device 1 within the scope of the present invention. The two halves of the device, 2 and 2', are fastened at points A and B. The inner rigid ring 4 is surrounded by the non-rigid ring 5.

Figure 2 illustrates, in cross-sectional view, the device 1 mounted within a tire 16 on a three-piece rim 9. The non-rigid portion 5 of the device is attached to the rigid portion 4 of the device at the topside of the rigid portion 4 by a conventional rubber/metal adhesive. The rigid portion of the device is comprised of two lateral sides 3, 3' and a topside 6 which are integrally bound together as a unit construction. A radial support 7 is also illustrated. When the tire collapses, the outer surface 8a of the non-rigid portion of the device comes in contact with the inner surface 17 of the tire. It should be noted that this device is used only in tubeless pneumatic tires. The pneumatic tires, however, can be of either radial or bias construction or cast tires for any type of vehicle whether passenger, motorcycle, truck and off-the-road, including military vehicles.

The rigid portion of the device is positioned on the base 10 of the three-piece rim 9, through the radial support, the lower edge of the radial support being positioned between two stops 8 and 8' (Figure 3).

After the device is positioned inside the tire, the base 10 is inserted through the bead opening of the tire until its permanent flange 19 rests near the bead of the tire. The tire is then positioned to shift the device toward the permanent flange side so as to permit the moveable flange 18 to be positioned axially toward the center line to expose the groove in the base, in which the O-ring 11 is to be snapped. The O-ring 11 is then positioned and the lock ring 12 then placed in the outer groove of the base. By using a cap screw 15, the lock plate 14 is positioned against the outer part of the flange and the tire inflated.

The rigid portion 4 of the device can act as a non-positive bead spacer. Should the tire lose pressure and the beads tend to move away from the flange thereby creating the possibility of their demounting from the tire, it will first come in contact with one of the lateral sides of the rigid portion of the device thereby preventing the dismounting.

In one embodiment the height of the rigid section of the device is 20 to 80 percent of the height of the device.

The device can also be used as a positive or non-positive bead spacer with a 2-piece rim. With other multi-piece rims such as 3-piece and 5-piece rims, the device can be used as a non-positive bead spacer. As guidelines, but not limitations, the width of the run flat device near its base should be approximately 19 to 25.4 mm. less than the rim width minus two times the tire bead width for 3-piece rims and should be approximately 38.1 to 50.8 mm. less than the rim width minus two times the tire bead width for 5-piece rim assemblies.

This is necessary to permit the transverse positioning of the moveable flange 18, for example, for insertion of the O-ring 11 and lock ring 13.

Figure 3 is an enlarged circumferential view of a portion of a device within the scope of the present invention. The non-rigid section 5 is positioned on top of the rigid section 4. The rigid section 4 has a radial support 7 which is positioned between two stops 8, 8' welded to the rim base 10. Two ends of the two halves of the device are shown as fastened by a cap screw 13.

When a moveable flange is used, the device should be designed to permit the moveable flange to move without interference from the device when the device and tire are being mounted and the rim assembled.

While fabric reinforcement can be used as reinforcement in the non-rigid portion of the device, e.g., to prevent growth due to centrifugal force, its use is not necessary.

In one embodiment of the present invention, the outer ring is a one-piece vulcanized elastomeric band which can be stretched around the outer perimeter of the multi-piece inner ring.

Absolute measurements of resiliency herein are measured by Goodyear Heally hot (100°C) rebound (ASTM D 1054).

When the outer ring is comprised of vulcanized elastomer, it is preferably non-porous.

The inside diameter of the device is approximately equal to the nominal rim diameter of the rim on which it is to be mounted.

**0 130 136**

## Claims

1. An assembly of a multi-piece rim (9), a tire (16), and a run flat device (1) comprising:

(a) a multi-piece rim (9) comprising a substantially cylindrical rim base (10) having a flange (19) extending radially outwardly from one axial end thereof and a groove in said rim near its other axial end, a movable flange (18) mounted on said rim base, and an O-ring (11) disposed within said groove;

(b) a tubeless pneumatic tire (16) mounted upon said rim (9), said tire having a pair of bead portions with one bead portion disposed adjacent to the flange (19) of said rim base and the other bead portion adjacent to said movable flange (18); and

(c) an annular ring-shaped run flat device (1) comprising a rigid radially inner ring (4) and a resilient radially outer ring (5), said rings (4, 5) comprising a plurality of parts (2, 2') having each end thereof fastened to an end of another part, each part (2, 2') comprising a radially inner rigid portion (4) having a horseshoe-shaped cross section and containing radial reinforcements (7) that extend radially inwardly to the open side of said horseshoe-shape, and a radially outer resilient portion (5) having a radially inner surface fastened to a radially outer surface of said inner rigid portion (4), the run flat device (1) being affixed to the rim (10) and having a height that is 25 to 55 percent of the tire section height while the height of the rigid inner ring (4) is 20 to 80 percent of the height of the run flat device (1), characterized in that said rim (9) has a plurality of circumferentially spaced apart stops (8, 8') thereon, and one of the radial reinforcements (7) of said run flat device (1) is disposed between said stops to restrict circumferential movement of the run flat device (1) with respect to said rim (9).

2. An assembly as claimed in claim 1 characterized in that the resilient ring (5) is made from a rubber material having a resilience between 30% to 70%.

## Patentansprüche

1. Anordnung aus einer mehrteiligen Felge (9), einem Reifen (16) und einer Vorrichtung (1) für den Fall einer Reifenpanne, mit:

a) einer mehrteiligen Felge (9) mit einer im wesentlichen zylindrischen Felgenbasis (10) mit einem Flansch (19), der sich radial nach außen von einem axialen Ende aus erstreckt, mit einer Nut in der Felge in Nähe des anderen axialen Endes, mit einem entfernbaren Flansch (18), der an der Felgenbasis befestigt ist, und mit einem O-Ring (11), der innerhalb der Nut angeordnet ist,

b) mit einem schlauchlosen Luftreifen (16), der auf der Felge (9) angeordnet ist, wobei der Reifen ein Paar Wulstabschnitte aufweist und wobei ein Wulstabschnitt angrenzend an den Flansch (19) der Felgenbasis und der andere Wulstabschnitt angrenzend an den entfernbaren Flansch (18) angeordnet ist, und

c) mit einer ringförmigen Vorrichtung (1) für den Fall einer Reifenpanne bestehend aus einem festen radial inneren Ring (4) und einem elastischen radial äußeren Ring (5), wobei die Ringe (4, 5) eine Vielzahl von Teilen (2, 2') aufweisen, die mit ihren Enden an einem Ende eines anderen Teils befestigt sind, wobei jedes Teil (2, 2') einen radial innenliegenden festen Abschnitt (4) mit hufeisenförmigem Querschnitt und radiale Verstärkungen (7) aufweist, welche sich radial innen zu der offenen Seite der Hufeisenform erstrecken, wobei ein radial äußerer elastischer Abschnitt (5) eine radial innere Fläche aufweist, die an der radial äußeren Fläche des inneren festen Abschnitts (4) befestigt ist, und wobei die Vorrichtung (1) für den Fall einer Reifenpanne an der Felge (10) befestigt und eine Höhe aufweist, die 25% bis 55% der Reifenquerschnittshöhe ist, während die Höhe des festen inneren Ringes (4) 20% bis 80% der Höhe der Vorrichtung (1) für den Fall einer Reifenpanne ist, dadurch gekennzeichnet, daß die Felge (9) eine Vielzahl von über den Umfang beabstandeten Stoppelementen (8, 8') aufweist, und daß eine der radialen Verstärkungen (7) der Vorrichtung (1) für den Fall einer Reifenpanne zwischen den Stoppeinrichtungen angeordnet ist, um eine Umfangsbewegung der Vorrichtung (1) für den Fall einer Reifenpanne gegenüber der Felge zu (9) begrenzen.

2. Anordnung nach Anspruch 1, dadurch gekennzeichnet, daß der elastische Ring (5) aus einem Gummimaterial mit einer Elastizität zwischen 30% bis 70% besteht.

## Revendications

1. Assemblage d'une jante en plusieurs pièces (9), d'un bandage pneumatique (16) et d'un dispositif de roulage à plat (1), cet assemblage comprenant:

(a) une jante en plusieurs pièces (9) comprenant un fond de jante pratiquement cylindrique (10) comportant un rebord (19) s'étendant radialement vers l'extérieur à partir d'une de ses extrémités axiales et une gorge ménagée dans la jante à proximité de son autre extrémité axiale, un rebord mobile (18) monté sur le fond de jante, ainsi qu'un joint torique (11) disposé dans la gorge;

(b) un bandage pneumatique sans chambre (16) monté sur la jante (9), ce bandage pneumatique comportant deux talons dont un est disposé à proximité du rebord (19) du fond de jante, tandis que l'autre talon est disposé à proximité du rebord mobile (18); et

(c) un dispositif de roulage à plat de forme annulaire (1) comprenant une couronne intérieure radiale rigide (4) et une couronne extérieure radiale élastique (5), ces couronnes (4, 5) comprenant plusieurs pièces

5

**0 130 136**

(2, 2') dont chaque extémité est fixée à une extrémité d'une autre pièce, chaque pièce (2, 2') comprenant une partie intérieure radiale rigide (4) ayant une section transversale en forme de fer à cheval et comportant des renforcements radiaux (7) qui s'étendent radialement vers l'intérieur en direction du côf ouvert de ce profil en fer à cheval, ainsi qu'une partie extérieure radiale élastique (5) comportant une surface intérieure radiale fixée à une surface extérieure radiale de la partie intérieure rigide (4), le dispositif de roulage à plat (1) étant fixé au fond de jante (10) et ayant une hauteur qui atteint 25 à 55% de la hauteur de section du bandage pneumatique, tandis que la hauteur de la couronne intérieure rigide (4) atteint 20 à 80% de la hauteur du dispositif de roulage à plat (1), caractérisé en ce que la jante (9) comporte plusieurs butées espacées circonférentiellement l'une de l'autre (8, 8'), un des renforcements radiaux (7) du dispositif de roulage à plat (1) étant disposé entre ces butées, de façon à limiter le mouvement circonférentiel du dispositif de roulage à plat (1) par rapport à la jante (9).

2. Assemblage selon la revendication 1, caractérisé en ce que la couronne élastique (5) est constituée d'une matière caoutchouteuse ayant une élasticité comprise entre 30 et 70%.

6

# FIG.1

FIG. 2

FIG. 3

FIG.4